**Europäisches Patentamt**

**European Patent Office**

**Office européen des brevets**

(11) Veröffentlichungsnummer: **0 270 732**
**A2**

(12) # EUROPÄISCHE PATENTANMELDUNG

(21) Anmeldenummer: **87107914.1**

(22) Anmeldetag: **02.06.87**

(51) Int. Cl.⁴: **B29C 65/02**

(30) Priorität: **09.12.86 DE 3641973**

(43) Veröffentlichungstag der Anmeldung:
**15.06.88 Patentblatt 88/24**

(84) Benannte Vertragsstaaten:
**AT BE CH DE FR LI NL SE**

(71) Anmelder: **Niederberg-Chemie GmbH**
**Postfach 11 63**
**D-4133 Neukirchen-Vluyn(DE)**

(72) Erfinder: **Schlütter, Aloys**
**Rheinstrasse 42**
**D-4152 Kempen 3(DE)**
Erfinder: **Schürmann, Ulrich**
**Margarethenstrasse 10**
**D-4130 Moers1(DE)**
Erfinder: **Kaewert, Klaus**
**Gänsestrasse 4**
**D-4000 Düsseldorf 13(DE)**

(54) **Schweissvorrichtung für Kunststoffabdichtungsbahnen.**

(57) Nach der Erfindung bestehen Andruckmittel, insbesondere Rollen, an Schweißvorrichtungen für Abdichtungsbahnen aus mehreren Teilen, die Unebenheiten der Abdichtungsbahn individuell ausweichen
können.

## Schweißvorrichtung für Kunststoffabdichtungsbahnen

Die Erfindung betrifft eine Schweißvorrichtung zum Verschweißen von Kunststoffabdichtungsbahnen, insbesondere von Abdichtungsbahnen für Dachabdichtungen, wobei die Bahnen an den Rändern überlappend verlegt werden und die miteinander zu verschweißenden Bahnenränder erwärmt und nach Plastifizierung der Schweißflächen mittels Andruckmittel aneinander gedrückt werden, insbesondere mit Rollen als Andruckmittel und mit Heißluftdüsen zur unmittelbaren Erwärmung und zum Freiblasen der Schweißflächen.

Es gibt Schweißvorrichtungen, die nach verschiedenen Prinzipien arbeiten. Bekannt sind Vorrichtungen zum Quellscheißen sowie Vorrichtungen zur reinen thermoplastischen Schweißung. Alle Schweißvorrichtungen besitzen eine Heizeinrichtung. Die Heizeinrichtung kann als Heizgebläse unmittelbar auf die Schweißflächen wirken, sie kann jedoch auch als Heizpatrone mittelbar über Heizkeile oder Heizschuhe auf die Schweißflächen wirken.

Ferner besitzen die Schweißvorrichtungen üblicherweise Andruckmittel um die plastifizierten Schweißflächen aneinanderzudrücken, bis eine ausreichende Verbindung zwischen den aneinander zu schweißenden Teilen entstanden ist. Die Andruckmittel sind als Rollen oder Keile oder Schuhe oder Bändern ausgebildet. Manche Andruckmittel sind schwingbeweglich und kippbeweglich angeordnet, so daß sie sich Unebenheiten der Abdichtungsbahnen anpassen können. Üblicherweise wird jedoch darauf vertraut, daß mit ausreichend starken Anpresskräften die Abdichtungsbahnen erfaßt und in Position gebracht werden. Beispielhaft sind die Geräte, die neben oben auf den Abdichtungsbahnen laufenden Rollen auch mindestens eine Andruckrolle aufweisen, welche unterhalb der zu verschweißenden Abdichtungsbahnen verläuft. Zum einen sind derartige Schweißvorrichtungen nicht überall anwendbar. Das gilt insbesondere für Abdichtungsbahnen, die mit Haltern an der Dachkonstruktion befestigt sind. Die Halter besitzen Deckel, die oben auf der Abdichtungsbahn aufliegen und die Abdichtungsbahn flächig angreifen. Die Deckel sind mit Schrauben oder Nägeln in der Dachkonstruktion gehalten.

Derartig befestigte Dachabdichtungsbahnen lassen sich in dem zu verschweißenden Randstreifen nicht aufnehmen und mit einer Rolle untergreifen. Hinzukommt, daß die zu starker Anstellung der Rollen die Gefahr einer Beschädigung der Dachabdichtungsbahnen und einer schlechten Schweißnahtqualität besteht.

Sobald Fremdkörper, insbesondere grobe Schmutzpartikel oder Materialreste zwischen den Schweißflächen liegen, konkretisiert sich die Beschädigungsgefahr, denn die Rollen geben üblicherweise dem sich auftuenden Rollwiderstand nicht nach, sondern überfahren die durch die zwischenliegenden Fremdpartikeln entstehenden Wölbungen. Dadurch pressen sich die Fremdpartikel in die Abdichtungsbahnen ein und perforieren diese. Es entstehen Schwachstellen in der Schweißnaht, ggf. sogar sofort Leckstellen.

Für die Schweißgeräte, die ohne Gegendruckrolle oben auf den Abdichtungsbahnen laufen und den Schweißdruck allein aufgrund ihres Gewichtes erzeugen, sind die Fremdpartikel eine besondere Gefahr. Hier müssen deshalb sofort Undichtigkeiten in der Schweißnaht entstehen, weil die Schweißvorrichtung über die entstehenden Wölbungen fährt, ohne diese zusammenpressen zu können. Im Ergebnis findet dadurch allenfalls eine Verbindung zwischen der oberen Schweißfläche und der korrespondierenden Berührungsfläche der Fremdpartikel und der unteren Schweißfläche und der korrespondierenden Berührungsfläche der Fremdpartikel statt, nicht aber zwischen den Schweißflächen unmittelbar. Um den Fremdpartikel herum bleiben Durchtrittsöffnungen für Oberflächenwasser.

Bei der Verwendung von Heizgebläsen zur Erzeugung der Schweißhitze eröffnet sich die Möglichkeit, die Heizgebläse zugleich zum Freiblasen der Schweißflächen zu benutzen. Das kann jedoch nur für Fremdpartikel kleineren Durchmessers und/oder geringen Gewichtes gelten. Für größere Fremdpartikel ist eine solche Gebläseleistung erfolderlich, daß zwangsläufig über die vorgesehenen Schweißflächen hinaus auch andere Bereiche der Dachabdichtungsbahnen von der Heißluft tangiert werden. In diesen Bereichen ist eine Plastifizierung des Materials sehr unerwünscht. Besonders kritisch wird die Sache bei der Verwendung von Abdichtungsbahnen, die an der Unterseite mit einem Kunststoffvlies versehen sind. Das Kunststoffvlies bildet in der Regel bei Abdichtungsbahnen eine notwendige Schutzlage. Diese Schutzlage verschmilzt sofort bei übermäßiger Beaufschlagung mit der Heißluft. Infolgedessen kann die Heißluft bei derartigen Bahnen nur unmittelbar gegen die Schweißflächen gerichtet werden und muß die Gebläseleistung möglichst gering gehalten werden. Infolgedessen ist der Freiblaseffekt der Heizung entsprechend gering.

Der Erfindung liegt die Aufgabe zugrunde, auch bei zwischenliegenden Fremdpartikeln noch eine ausreichende Sicherheit der Schweißnähte zu gewährleisten.

Nach der Erfindung wird das dadurch erreicht, daß die Andruckmittel an der Andruckfläche mehrteilig ausgebildet sind und die Einzelteile unabhängig voneinander quer zur Andruckfläche bewegbar sind. Vorzugsweise ist mindestens eine Dreiteiligkeit in dem Sinne gegeben, daß das Andruckmittel (Rolle, Schuh, Keil) drei parallel nebeneinander liegende und sich ohne Abstand aneinander schließende Andruckspuren erzeugt, die zusammen die Schweißnaht bilden. Während bei einem zweiteiligen Andruckmittel noch die Gefahr besteht, daß Fremdpartikel sowohl den einen als auch den anderen Andruckteil tangieren, ist bei drei-und mehrteiligen Andruckmitteln in der Praxis gesichert, daß mindestens ein Andruckteil in der vorgesehenen Weise eine Verschweißung bewirkt. Derart große Fremdpartikel, die zugleich alle drei Andruckbereiche tangieren, kommen in der Praxis nicht vor, da derart große Fremdpartikelbei einer der Verschweißung vorausgehenden Inspektion augenfällig sind.

Die Drei-und Mehrteiligkeit des Andruckmittels ist von ganz besonderer Wichtigkeit, wenn in die Schweißnaht Teile eingebunden werden sollen. Nach einem neueren Vorschlag sind die Halter mit dehnungsfähigen Lippen versehen und reichen mit den Lippen teilweise in die Schweißnaht. Die Halter können auch mit einem auf kaschierten Materialstreifen versehen sein, der wie die Lippen in die Schweißnaht reicht. Dadurch entsteht eine unmittelbare Krafteinleitung in den Halter.

Bei derartiger Einbindung von Haltern in die Schweißnaht muß das Andruckmittel einer Schweißvorrichtung zwangsläufig angehoben werden. Bei der Verwendung einer erfindungsgemäßen Schweißvorrichtung mit mehrteiligen Andruckmitteln werden nicht alle Andruckmittelteile angehoben. Die unverändert über den Randstreifen der Abdichtungsbahn gleitenden oder rollenden Andruckmittel sichern dann die geschlossene Schweißnaht. Bei Verwendung einer Rolle als Andruckmittel läßt sich die Mehrteiligkeit nach der Erfindung dadurch erreichen, daß die Rolle sich aus unmittelbar aneinanderliegenden Scheiben zusammensetzt. Während zweiteilige Rollen noch von den Seiten die einander abgewandt sind, in einfacher Weise gehalten werden können, bedarf die Verwendung drei-und mehrteiliger Rollen schon besondere Überlegungen. Vorzugsweise sind die Scheiben von drei-und mehrteiligen Rollen auf einer gemeinsamen Achse mit so viel Spiel angeordnet, wie für die Scheibenbewegung in der Richtung quer zur Andruckfläche erforderlich ist. Die Scheiben sind unabhängig voneinander bewegbar und einzeln federbelastet. Dadurch können die Scheiben einzeln einem Rollwiderstand z.B. durch Bewegung nach oben ausweichen. Die nach der Erfindung vorgesehene einzelne Beaufschlagung der Scheiben mit Federkraft kann z.B. durch Blattfedern verwirklicht werden,die auf den Scheiben gleiten. Bei etwa paralleler Blattfederlage zur Schweißfläche ist eine ausreichende Führung der Scheiben gesichert.

Die Scheiben und die Achse sowie die Blattfedern unterliegen insbesondere bei Verwendung verschleißfester Materialien einem so geringen Verschleiß, daß gleitende Bewegungen zwischen den Scheiben und der Achse sowie den Federn über Jahre hinaus keine Auswechselung von Teilen erfordern. Wahlweise läßt sich einem Verschleiß auch entgegenwirken, indem zwischen den Andruckfedern und den Scheiben zusätzliche Rollen vorgesehen sind, wobei die Rollen mit den Andruckfedern in kraftschlüssiger Verbindung stehen. die Andruckrollen können versetzt angeordnet werden. Dadurch entsteht jeweils um die Andruckrollen herum soviel Freiraum, daß die Federn unmittelbar an die Lagerbolzen der Andruckrollen angreifen können. Bei Verwendung der zusätzlichen Rollen kann auch von Vorteil sein, die Scheiben seitlich mit einer Rollenführung an einem Ausweichen in der Richtung parallel zur Schweißfläche zu hindern.

Schließlich eröffnet die erfindungsgemäße Mehrteiligkeit auch die Möglichkeit, diese kippbeweglichen Anordnungen der Andruckrollen bzw. Andruckmittel um eine zur Schweißnaht parallel verlaufende Achse bei Wölbungen in der Dachkonstruktion eine ausreichende Verschweißung sicherzustelllen. Die erfindungsgemäße mehrteilige Rolle paßt sich Wölbungen in der Dachkonstruktion, welche sich in den aufliegenden Abdichtungsbahnen fortsetzen, genau an wie bei zwischenliegenden Fremdpartikeln.

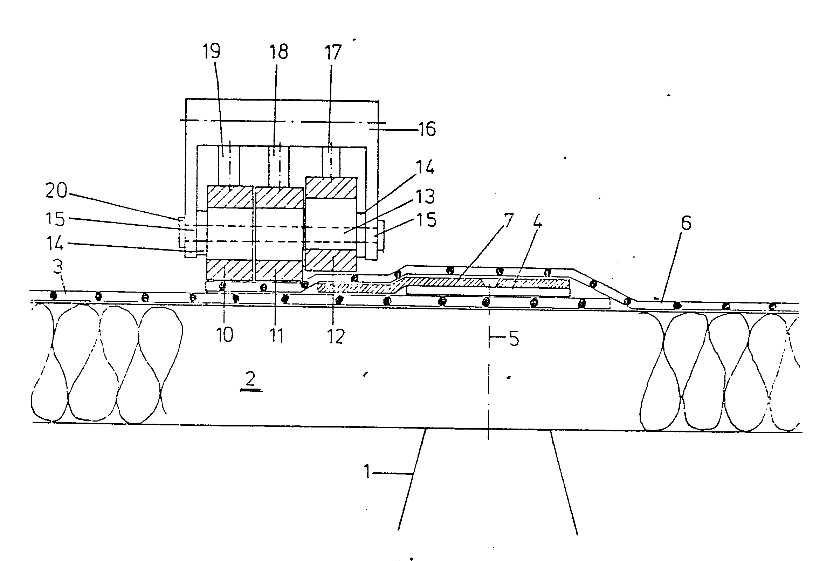

In der Zeichnung ist ein Ausführungsbeispiel der Erfindung dargestellt.

Mit 1 ist ein Trapezblech einer Dachtragekonstruktion bezeichnet. Über der Dachtragekonstruktion liegt eine Isolierschicht 2, im Ausführungsbeispiel Mineralwolle. Auf der Isolierschicht 2 liegen Abdichtungsbahnen 3 und 6, die einander im Randbereich überlappen. In dem dargestellten Randbereich ist die unten liegende Abdichtungsbahn 3 mit einem Halter an der Dachtragekonstruktion befestigt. Der Halter besteht aus einem Teller 4, der über eine strichpunktiert dargestellte Schraube 5 an der Dachtragekonstruktion gehalten ist. Der Deckel des Halters ist mit einer aufkaschierten Folie 7 versehen, welche mit einem Teil in die Schweißnaht reicht. Die Schweißnahtbreite wird durch eine Andruckrolle bestimmt, welche sich aus drei Scheiben 10, 11 und 12 zusammensetzt. Die Scheiben 10, 11, 12 liegen unmittelbar aneinander und laufen auf einer gemeinsamen Achse 13. An den Außenseiten der Andruckrolle werden die Scheiben 10, 11, 12 durch Scheiben 14, Gewindezapfen 15, Muttern 20 und eine Gabel 16 gehalten. Die Gabel 16 ist gelenkig im nicht dargestellten Gehäuse der Schweißvorrichtung gelagert. Durch die Gabelenden die Achse 13 hindurchgesteckt. Die Scheiben 14 sichern einen Abstand zwischen den Gabelenden und den Scheiben 10 und 12. Die Muttern 20 sichern die Achslage in der Gabel 16.

Die Scheiben 10, 11 und 12 besitzen in ihren Lagerbohrungen ein Spiel im Ausführungsbeispiel 3 mm. Aufgrund dieses Spieles können die Scheiben individuell auftretenden Unebenheiten der oben liegenden Abdichtungsbahn 6 ausweichen. Die Scheiben 10, 11 und 12 werden dabei von Federn 17, 18 und 19 gegen die Abdichtungsbahn 6 gedrückt. Die Federn 17, 18 und 19 sind an einem Ende an der Gabel 16 befestigt und gleiten am anderen Ende auf den Scheiben 17, 18 und 19. Die Schwenkbarkeit der Gabel 16 dient dazu, die Andruckrolle zu Beginn des Schweißvorganges in Eingriff mit der oberen Abdichtungsbahn 6 zu bringen bzw. nach Beendigung des Schweißvorganges hochzuschwenken.

Ferner wird die Andruckkraft durch Schwenken der Gabel 16 auf das gewünschte Maß eingestellt.

## Ansprüche

1. Schweißvorrichtung zum Verschweißen von Kunststoffabdichtungsbahnen, insbesondere von Abdichtungsbahnen für Dachabdichtungen, wobei die Bahn an den Rändern überlappend verlegt werden und miteinander zu verschweißenden Bahnenränder erwärmt und nach Plastifizierung der Schweißfläche mittels Andruckmittel aneinander gedrückt werden, insbesondere mit Rollen als Andruckmittel und Heißluftdüsen zur unmittelbaren Erwärmung der Schweißflächen, **dadurch gekennzeichnet,** daß die Andruckmittel (10, 11, 12) an der Andruckfläche mehrteilig ausgebildet sind und die Einzelteile (10, 11, 12) unabhängig voneinander quer zur Andruckfläche bewegbar sind.

2. Schweißvorrichtung nach Anspruch 1, **gekennzeichnet** durch ein mindestens dreiteiliges Andruckmittel (10, 11, 12).

3. Schweißvorrichtung nach Anspruch 1 oder 2, **gekennzeichnet** durch eine aus mehreren Scheiben (10, 11, 12) zusammengesetzte Andruckrolle.

4. Schweißvorrichtung nach Anspruch 3, **dadurch gekennzeichnet,** daß die Scheiben (10, 11, 12) auf einer gemeinsamen Achse laufen und in der Lagerbohrung ein Spiel aufweisen, das gleich der notwendigen Scheibenbewegung quer zur Andruckfläche ist, wobei die Scheiben (10, 11, 12) einzeln federbelastend sind.

5. Schweißvorrichtung nach Anspruch 4, **dadurch gekennzeichnet,** daß zwischen den Andruckfedern und den Scheiben zusätzliche Rollen vorgesehen sind und/oder die Scheiben in der zur Andruckfläche parallelen Richtung mit Führugnsrollen versehen sind.